(19) Europäisches Patentamt
European Patent Office
Office européen des brevets

(11) **EP 3 157 763 B1**

(12) **FASCICULE DE BREVET EUROPEEN**

(45) Date de publication et mention
de la délivrance du brevet:
**24.10.2018 Bulletin 2018/43**

(21) Numéro de dépôt: **15736591.7**

(22) Date de dépôt: **16.06.2015**

(51) Int Cl.:
***B60C 11/02*** *(2006.01)*

(86) Numéro de dépôt international:
**PCT/IB2015/000972**

(87) Numéro de publication internationale:
**WO 2015/193719 (23.12.2015 Gazette 2015/51)**

(54) **CARCASSE DE PNEUMATIQUE COMPORTANT UNE COUCHE EXTERNE D'ÉLASTOMÈRE THERMOPLASTIQUE**

REIFENKARKASSE MIT EINER AUSSENSCHICHT AUS THERMOPLASTISCHEM ELASTOMER

TYRE CARCASS COMPRISING AN OUTER LAYER OF THERMOPLASTIC ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2014 FR 1401397**

(43) Date de publication de la demande:
**26.04.2017 Bulletin 2017/17**

(73) Titulaire: **Compagnie Générale des Etablissements Michelin
63000 Clermont-Ferrand (FR)**

(72) Inventeurs:
• **HUYGHE, Jean-Michel
  F-63040 Clermont-Ferrand Cedex 9 (FR)**
• **VILCOT, Florian
  F-63040 Clermont-Ferrand Cedex 9 (FR)**
• **MERINO LOPEZ, José
  F-63040 Clermont-Ferrand Cedex 9 (FR)**

(74) Mandataire: **Lasson, Cédric Yves
Manufacture Française des
Pneumatiques Michelin
DGD/PI F35 Ladoux
23, place des Carmes - Déchaux
63040 Clermont-Ferrand Cedex 9 (FR)**

(56) Documents cités:
**WO-A1-2008/006185      FR-A1- 2 988 728**

EP 3 157 763 B1

**Description**

## DOMAINE TECHNIQUE DE L'INVENTION

La présente invention concerne une carcasse de pneumatique comportant deux flancs, une zone de sommet adaptée pour recevoir, radialement extérieurement, une bande de roulement amovible.

## ETAT DE LA TECHNIQUE ANTERIEURE

La demande de brevet WO 2009/139449 A1 propose un pneumatique à carcasse radiale qui comprend au moins une couche de carcasse qui relie les parties de talon droite et de gauche, une couche de ceinture disposée sur la périphérie extérieure de la couche carcasse, et une bande de roulement disposée sur la périphérie extérieure de la couche de ceinture, dans lequel la bande de roulement possède une structure en couches comprenant une couche la bande de roulement de la surface du côté caoutchouc, une couche de caoutchouc de courroie côté couche, et une couche de film thermoplastique interposée entre celles-ci qui est constituée d'une résine thermoplastique ou une composition d'élastomère thermoplastique obtenue en mélangeant une résine thermoplastique avec un élastomère. L'invention concerne également un procédé de fabrication d'un pneumatique rechapé du pneumatique à carcasse radiale dont la bande de roulement est usée, le procédé comprenant le ramollissement de la couche de film thermoplastique par chauffage, séparation et retrait de la couche de caoutchouc bande de roulement de la surface du côté pour former une enveloppe de pneumatique, et ensuite le collage d'une couche de bande de roulement en caoutchouc côté surface fraiche de l'enveloppe de pneumatique.

Le document JP 2011042091 propose de réduire le coût de production d'un pneu à l'aide d'un matériau thermoplastique à un membre de squelette de pneu. L'organe de squelette pneumatique est formé à l'aide d'un matériau thermoplastique, et le coussin en caoutchouc (caoutchouc non vulcanisé) est disposé sur la surface périphérique de l'organe de squelette. Le caoutchouc de bande de roulement vulcanisé ou semi-vulcanisé est disposé à l'extérieur du diamètre de pneu de direction de la gomme de coussin. La périphérie de la bande de roulement est recouverte d'un élément de retenue en forme de bande pour pousser la bande de roulement sur le côté de l'organe de squelette pneumatique pour constituer un article assemblé temporairement. L'article assemblé est temporairement maintenue dans un récipient, et la vulcanisation est effectuée par chauffage de l'intérieur du récipient, de sorte que le caoutchouc de bande de roulement est collée à l'organe pneumatique.

La demande de brevet JP 2011042229 propose de garantir une surface de joint uniforme et stable sur une partie commune d'un membre de squelette de pneu formé d'un matériau thermoplastique avec une bande de roulement.

Le document FR2988728 concerne un pneumatique radial pour véhicule automobile, comportant notamment une armature de sommet disposée circonférentiellement entre la partie radialement externe de la bande de roulement et l'armature de carcasse. Une couche élastomère radialement interne dite sous-couche, de formulation différente de la formulation de la partie radialement externe de la bande de roulement, est elle-même disposée circonférentiellement entre la partie radialement externe de la bande de roulement et l'armature de carcasse. Ladite sous-couche comprend au moins un élastomère thermoplastique, ledit élastomère thermoplastique étant un copolymère bloc comprenant au moins un bloc élastomère et au moins un bloc thermoplastique, le taux total d'élastomère thermoplastique étant compris dans un domaine variant de 65 à 100 pce (parties en poids pour cent parties d'élastomère).

La demande WO2008006185 décrit un support universel pour bande de roulement de pneumatique, sous forme de pièce finie destinée à une application sur mesure pour tout type de bande de roulement, constitué de talons, de flancs entourant une zone plane surmontée d'une zone bombée, la bande de roulement étant dotée d'une couche de base revêtue d'une couche en élastomère compatible avec une autre couche présentant des caractéristiques auto-adhésives et qui est protégée contre l'oxydation et différents contaminants par un film en matière plastique amovible.

Ces différents systèmes impliquent des procédés complexes et coûteux, et procurent des résultats incertains en regard des caractéristiques d'adhésion entre la bande de roulement et la carcasse.

Pour pallier ces différents inconvénients, l'invention prévoit différents moyens techniques.

## EXPOSE DE L'INVENTION

Tout d'abord, un premier objet de l'invention consiste à prévoir un dispositif ou un procédé permettant de simplifier les opérations de rechapage et de déchapage, en particulier pour une utilisation avec des pneumatiques destinés à des véhicules automobiles de tourisme ou véhicules personnels.

Un autre objet de l'invention consiste à prévoir un dispositif ou procédé permettant d'effectuer une opération de déchapage avec une grande précision et avec une bonne répétabilité.

Encore un autre objet de l'invention consiste à prévoir un dispositif ou procédé permettant d'effectuer des opérations de rechapage et déchapage sur des sites non industriels, par exemple des stations services effectuant le montage/démontage des pneumatiques.

Encore un autre objet de l'invention consiste à prévoir un dispositif ou procédé permettant d'effectuer des opérations de déchapage et rechapage favorisant l'obtention de pneumatiques rechapés dont les caractéristiques d'adhérence entre la bande roulement et la carcasse sont particulièrement favorables, stables et durables.

Pour ce faire, l'invention prévoit une carcasse de pneumatique conforme à la revendication 1 annexée.

Selon l'invention, l'interface TPE / Mélange élastomère est co-réticulée, sans que la couche de TPE soit réticulée dans la masse. Cette caractéristique permet que l'interface TPE / mélange élastomère soit particulièrement résistante et durable tout en conservant les propriétés intrinsèques à la couche de TPE. Ceci est possible du fait que la carcasse est obtenue par moulage et vulcanisation conjoint d'un mélange élastomère de carcasse comportant des agents de réticulation et de la couche élastomère thermoplastique adjacente dépourvue d'agents de réticulation, le moulage et la réticulation permettant une co-réticulation de l'interface TPE / mélange élastomère sans que la couche de TPE soit réticulée dans la masse.

Une telle architecture du produit procure une carcasse optimisée pour recevoir dans un premier temps une bande de roulement neuve déchapable, et par la suite pour effectuer les opérations subséquentes de déchapage et rechapage à coût optimal, avec des niveau de précision très élevés.

Selon un mode de réalisation avantageux, la couche d'élastomère thermoplastique (TPE) est réticulée avec la couche adjacente de mélange caoutchoutique de sommet.

La co-réticulation de la couche de TPE avec les mélanges de caoutchouc du pneumatique par vulcanisation a montré un effet extrêmement positif et robuste. La réticulation se fait avec les agents présents dans le pneumatique (souffre et accélérateur habituels dans les mélanges de caoutchouc des pneumatiques). Ces agents sont absents dans la couche de TPE quand l'ébauche du pneu est réalisée, avant cuisson. La faible migration de ces agents pendant la cuisson permet une réticulation au souffre dans l'interface TPE/gomme et que le produit TPE ne soit pas réticulé dans la masse.

Selon l'invention, la couche d'élastomère thermoplastique (TPE) se situe radialement extérieurement par rapport à la carcasse.

De manière avantageuse, la couche d'élastomère thermoplastique (TPE) est recouverte d'une membrane de protection amovible.

Egalement de manière avantageuse, la couche d'élastomère thermoplastique (TPE) est constituée de SBS ou de SBS/PPE.

Egalement de manière avantageuse, la couche d'élastomère thermoplastique (TPE) comporte une épaisseur comprise entre 10 $\mu$m et 1mm, et plus préférentiellement entre 10 $\mu$m et 200 $\mu$m et encore plus préférentiellement entre 10 $\mu$m et 80 $\mu$m.

Selon encore un mode de réalisation avantageux, la carcasse comporte une structure de renfort de carcasse, de préférence pourvue de renforts radiaux et/ou longitudinaux.

Egalement de manière avantageuse, la carcasse comporte au moins une armature de sommet (par exemple des couches de renforts - croisés ou non - disposés avec une inclinaison angulaire par rapport à un plan méridien de la carcasse).

L'invention prévoit également un pneumatique constitué d'une carcasse tel que préalablement décrit, sur laquelle est disposée une bande de roulement fixée contre la surface circonférentielle de support de bande de roulement.

Dans une variante avantageuse, la bande de roulement est fixée à la carcasse par thermocollage.

Dans une autre variante avantageuse, la bande de roulement est fixée à la carcasse de façon amovible (par exemple au moyen d'énergie thermique appliquée au niveau de l'interface entre les deux éléments à désassembler).

## DESCRIPTION DES FIGURES

Tous les détails de réalisation sont donnés dans la description qui suit, complétée par les figures 1 à 11, présentées uniquement à des fins d'exemples non limitatifs, et dans lesquelles :

- les figures 1A à 1E illustrent schématiquement le concept mis en oeuvre dans le cadre de la présente invention, avec une carcasse et une bande de roulement formant un pneumatique neuf en 1A, un pneumatique avec bande de roulement usée à la figure 1B, le retrait (déchapage) de la bande de roulement usée à la figure 1C, la pose d'une nouvelle bande de roulement (rechapage) à la figure 1D, et le pneumatique rechapé à la figure 1E ;
- la figure 2 illustre un exemple de carcasse pourvue d'une couche d'élastomère thermoplastique à la zone d'interface avec la bande de roulement ;
- la figure 3 montre schématiquement un pneumatique en deux parties selon l'invention ;
- la figure 4 montre une variante architecture du pneumatique de la figure 3 ;
- les figures 5A et 5B présentent schématiquement des exemples d'architecture de zones de sommet avec diverses positions des renforts ;

- la figure 6 illustre une représentation schématique d'une bande de roulement selon l'invention ;
- les figures 7A et 7B montrent schématiquement le mode de moulage d'une bande de roulement telle que celle illustrée à la figure 6 ;
- les figures 8A et 8B montrent schématiquement des variantes de bandes de roulement avec les renforts circonférentiels prévus dans la couche de TPE (figure 8A) ou dans la couche de matériau caoutchoutique (figure 8B) ;
- les figures 9A et 9B montrent schématiquement une variante de réalisation dans laquelle la portion amovible se prolonge d'un bourrelet à l'autre, formant une couronne ;
- la figure 10 est un schéma illustrant le moulage de la couronne illustrée aux figures 9A et 9B avec un moule avantageusement en plusieurs sections afin de faciliter le démoulage ;
- la figure 11 illustre schématiquement un exemple de couronne moulée vue en perspective.

## DESCRIPTION DETAILLEE DE L'INVENTION

### Système de rechapage rapide

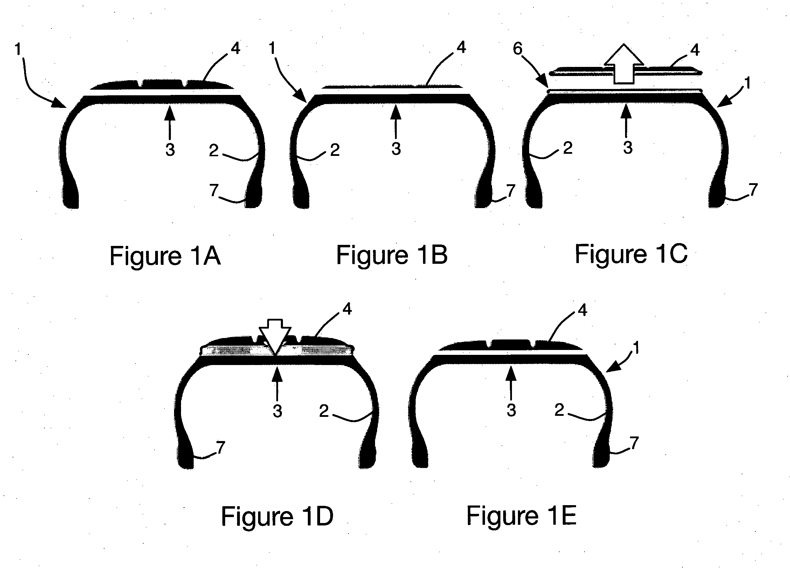

Les figures 1A à 1E illustrent schématiquement le principe de base du dispositif et du procédé mis en oeuvre dans le cadre de la présente invention, qui consistent à disposer, dans le pneumatique à l'état neuf (figure 1A), d'une couche de matériau élastomère thermoplastique (TPE), spécifiquement prévue pour les opérations de déchapage et de rechapage. Grâce à cette nouvelle architecture, ces dernières opérations peuvent à présent être effectuées beaucoup plus rapidement et aisément lorsque nécessaire sur un pneumatique usé (figures 1B et 1C).

En effet, une fois le pneumatique usé, les opérations suivantes peuvent être facilement et rapidement effectuées :

- la couche de TPE est ramollie par l'effet de la chaleur, rendant ainsi le déchapage de la bande de roulement après usure très aisé (figure 1C) ;
- une fois la bande de roulement séparée du reste du pneumatique, la carcasse obtenue dispose en surface d'une couche de TPE spécifiquement adaptée pour recevoir une nouvelle bande de roulement ;
- le renouvellement de la bande de roulement (figures 1D et 1E) se fait en ajoutant une nouvelle bande de roulement qui comporte elle aussi une couche de TPE. En chauffant l'ensemble et en maintenant la bande de roulement en contact avec la carcasse avec une certaine pression (figure 1D), la bande de roulement reste collée à la carcasse, avec une adhérence forte et durable, sans utilisation d'adhésif, puisque l'adhérence procurée par le thermocollage confère un résultat très avantageux.

Les avantages principaux de cette architecture et de ce procédé sont :

- la rapidité des opérations, qui ne requièrent pas de cardage pour enlever la bande de roulement, ni de vulcanisation après la pose de la nouvelle bande de roulement, comme il est d'usage avec les systèmes de rechapage actuels ;
- la grande précision de l'opération de déchapage, du fait de la zone de séparation spécifiquement prévue et délimitée dès la conception du pneumatique. Cette délimitation précise permet de maitriser et de diminuer la quantité de mélange caoutchoutique (ou gomme) laissée sur la carcasse. Ce dernier aspect est très favorable pour l'endurance du pneumatique et limite la consommation de carburant ;
- la réalisation des opérations de déchapage et rechapage en point de vente et/ou de remplacement des pneumatiques rend obsolète la gestion des stocks et la logistique inhérentes au suivi des carcasses ;
- le pneumatique comportant une couche de TPE est difficilement démoulable avec un procédé classique. En effet la couche de TPE se trouve ramollie dans la presse de cuisson et le démoulage du moule comportant le dessin de la bande de roulement exerce un effort radial sur la bande de roulement qui peut provoquer des décollages de celle-ci. Une solution possible consiste à refroidir le pneumatique dans la presse avant démoulage. Cette action est très défavorable du point de vue énergétique et est peu réaliste sur un plan industriel. La solution de l'invention permet de pallier cet inconvénient.

Ainsi la conception du pneumatique selon l'invention est prévue en deux parties : une partie désignée par le terme « carcasse » et une autre désignée par le terme « bande de roulement ».

### i) Carcasse pour réalisation d'un pneumatique neuf ou avec carcasse pré-utilisée

Le pneumatique est fabriqué en deux parties : une carcasse et une bande de roulement. Une carcasse est un pneumatique qui ne comporte pas de bande de roulement. Il est utile de considérer les carcasses à deux moments de la vie du pneumatique, soit avec un pneumatique neuf, soit avec un pneumatique dont la bande de roulement est usée.

Ces deux parties sont assemblées pour réaliser le pneumatique final. La carcasse utilisée est soit nouvellement fabriquée, soit obtenue par déchapage de la bande de roulement d'un pneumatique utilisé dont la bande de roulement est usée. Cette opération peut être réalisée après usure de la bande de roulement pour placer une nouvelle bande de roulement sur la carcasse obtenue par déchapage.

Dans les deux cas, la carcasse 1 comporte des bourrelets 7, des flancs 2 et une zone de sommet 3 permettant de relier les deux flancs 2 par leur portion radialement extérieure. La carcasse 1 comporte avantageusement une ou plusieurs armatures de carcasse 5 et de sommet 7, un éventuel renfort à 0°, comme un pneumatique standard.

Toutefois elle ne dispose pas de bande de roulement. En lieu et place de cette dernière, la zone radialement extérieure destinée à venir en contact avec une bande de roulement, est pourvue d'une couche de matériau d'élastomère thermoplastique (TPE) tel que décrit plus loin.

La couche de TPE peut avoir une épaisseur de l'ordre de 0.1 à 1 mm. Avantageusement, cette couche est d'une épaisseur réduite, entre 10 et 200 $\mu$ et encore plus avantageusement entre 10 et 80 $\mu$. D'excellents résultats en endurance ont été obtenus lors d'essais internes avec une couche de TPE entre 20 et 50 $\mu$.

Les matériaux utilisés avec succès sont le SBS/PPE et le $\alpha$SB$\alpha$S étant $\alpha$S l'$\alpha$-méthyl-styrène.

La carcasse est avantageusement fabriquée par moulage dans une presse de cuisson/vulcanisation. La presse peut être refroidie pour favoriser la formation d'une couche de TPE sans défaut.

Avantageusement entre l'ébauche de carcasse et son insertion dans le moule de cuisson, on introduit un intercalaire thermoplastique, résistant à la température de cuisson. On utilise avantageusement (sans que cette énumération soit limitative) des matériaux tels que : ETFE (Éthyltétrafluoréthylène), PTFE (Polytétrafluoroéthylène), FEP (Etylène Propylène Fluoré), PFA, (Perfluoroalkoxy), PMP (Polyméthylpentène) ou PA (Polyamide).

Les films utilisés ont avantageusement une épaisseur inférieure à 100 $\mu$m et plus préférentiellement comprise entre 25 et 50 $\mu$m.

Pour favoriser le moulage, en évitant particulièrement la formation de bulles de gaz en surface, il est avantageux de prévoir un état de surface rugueux lors du moulage.

Un tel état de surface peut être obtenu par exemple :

- avec des éléments taillés dans le moule comme des stries, d'une profondeur inférieure à 0.5 mm et préférentiellement inférieure à 0.3 mm. Avantageusement, les canaux sont connectés entre eux de façon à former un réseau ;
- grâce à l'utilisation d'un moule de type velours ;
- grâce à l'utilisation d'un tissu en contact avec la surface du moule.

La surface de support de bande de roulement obtenue au moyen de cette architecture et de ce procédé présente une rugosité de surface qui est favorable au collage entre la carcasse et la bande de roulement.

**ii) Bande de roulement (architecture et moulage)** :

La bande de roulement 4 comporte une couche d'élastomère thermoplastique (TPE) 8 au niveau de sa surface radialement inférieure. Cela permet de faire un assemblage avec une carcasse 1 comportant elle aussi une couche d'élastomère thermoplastique (TPE) sur sa surface radialement extérieure 6.

Pour effectuer le moulage tout en évitant que le TPE adhère aux parois du moule, un film antiadhésif 12 est disposé dans le moule. On utilise avantageusement des films thermoplastiques résistant à la température de cuisson. Pour les pneumatiques des véhicules de tourisme, la température de fusion ou ramollissement du plastique doit être supérieure à 180°C, et de préférence supérieure à 200°C. On utilise avantageusement (sans que cette énumération soit limitative) des matériaux tels que: ETFE (Éthyltétrafluorethylène), PTFE (Polytétrafluoroéthylène), FEP (Etylène Propylène Fluoré), PFA, (Perfluoroalkoxy), PMP (Polyméthylpentène) ou PA (Polyamide).

Les films utilisés ont avantageusement une épaisseur inférieure à 100 $\mu$m et plus préférentiellement comprise entre 25 et 50 $\mu$m.

Le moulage de la bande de roulement 4 est effectué avec un élément de moule 10 radialement extérieur qui présente les motifs de sculpture de la bande de roulement et un élément de moule 11 radialement intérieur. Le moule radialement intérieur 11 est destiné à mouler la surface de TPE qui est (totalement ou partiellement) en contact avec la zone TPE de la carcasse pour faire un collage thermique (souvent désigné par le terme « hot melt » en anglais).

Comme pour la carcasse, pour favoriser le moulage en évitant particulièrement la formation de bulles de gaz en surface, il est avantageux de donner un état de surface rugueux pendant le moulage. Un tel état de surface peut être obtenu par exemple :

- avec des éléments taillés dans le moule comme des stries, d'une profondeur inférieure à 0.5 mm et préférentiellement inférieure à 0.3 mm. Le moule avec les stries de surface peut être téflonné. Avantageusement, les canaux sont connectés entre eux de façon à former un réseau ;

- grâce à l'utilisation d'un moule de type velours ;
- grâce à l'utilisation d'un tissu en contact avec la surface du moule.

La bande de roulement obtenue présente une rugosité de surface qui est favorable au collage entre la carcasse et la bande de roulement.

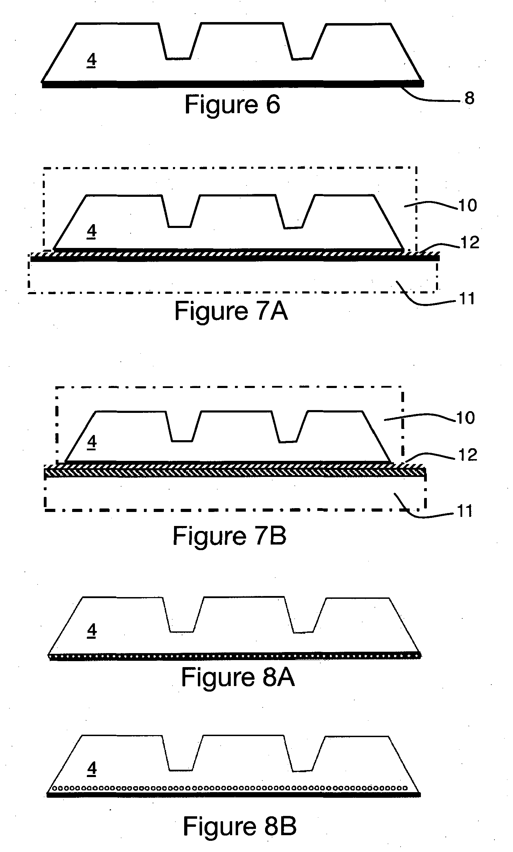

La figure 7A illustre un exemple de réalisation dans lequel un film 12 est disposé entre le moule et la couche de TPE.

La figure 7B illustre une variante dans laquelle un tissu 13 est également prévu, avantageusement sous le film 12. Le tissu peut être réalisé en PA, en polyester, ou autre, et avoir avantageusement une épaisseur comprise entre 0.1 et 1 mm.

En variante, des cycles de chute de pression sont effectués pendant le moulage afin de favoriser le dégazage et ainsi favoriser une meilleure qualité de moulage.

Encore en variante, l'utilisation du dispositif précédent (avec tissu ou moule strié) permet de faire un moulage de bonne qualité en diminuant les cycles de chute de pression.

### iii) Variantes de réalisation avec le positionnement de la zone de séparation carcasse/bande de roulement

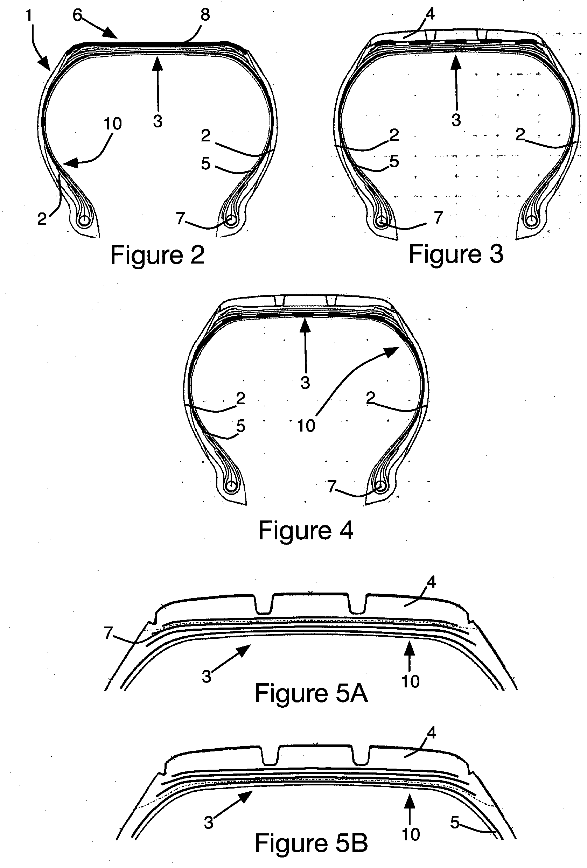

Dans les exemples de réalisation des figures 2 et 3, les couches de TPE respectives de la carcasse et de la bande de roulement sont prévues de façon à ce que la bande de roulement soit dépourvue de renforts (figure 3), ceux-ci étant prévus au niveau de la carcasse (figure 2).

Les figures 4, 5A et 5B illustrent diverses variantes dans lesquelles la frontière entre ces deux éléments et prévue selon d'autres architectures. Par exemple, à la figure 4, la carcasse comporte les renforts de carcasse prévus d'un bourrelet à l'autre, et la bande de roulement loge les autres renforts tels que les renforts sommet. Les exemples des figures 5A et 5B illustrent d'autres variantes architecturales dans lesquelles les renforts de sommet sont répartis entre la bande de roulement et la carcasse (figure 5A), ou concentrés au niveau de la bande de roulement (figure 5B). Ces diverses variantes procurent divers avantages en fonction des performances recherchées d'une part, mais aussi en regard des possibilités de contrôle de la bonne qualité des renforts de la carcasse avant un éventuel rechapage. Par ailleurs, dans le cas où les renforts sont concentrés au niveau de la bande de roulement, leur retrait avant rechapage permet d'éviter tout utilisation prolongée de renforts ayant subi une éventuelle oxydation.

Dans une autre variante utilisant une double couche de renforts circonférentiels, la frontière se situe avantageusement entre ces deux couches de renforts.

### iv) Mode de réalisation avec bande de roulement en forme de couronne

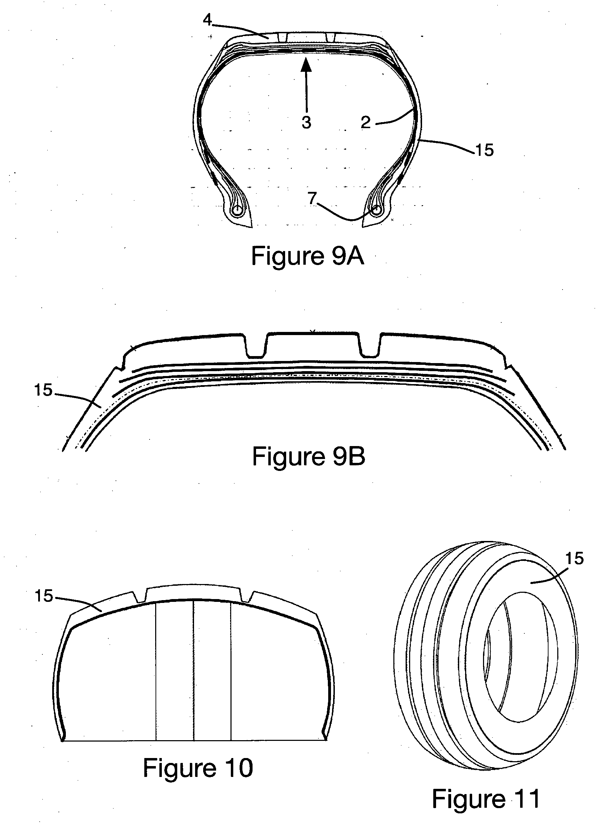

Les figures 9 à 11 sont des représentations schématiques d'un autre mode de réalisation de l'invention dans lequel la frontière entre la bande de roulement 4 et la carcasse 1 se prolonge d'un flanc 2 à l'autre, ou d'un bourrelet 7 à l'autre, formant une couronne 15, tel que montré dans l'exemple de la figure 9A. La figure 10 montre un exemple de réalisation d'un moule de bande de roulement étendue ou couronne 15. Afin de favoriser le démoulage, ce moule est avantageusement réalisé en plusieurs sections démontables l'une par rapport à l'autre tel que montré à la figure 10.

Les matériaux mis en oeuvre, les précautions liées au moulage, tel que l'utilisation d'un film antiadhésif 12 et/ou un tissu 13, s'appliquent de façon similaire à ces modes de réalisation.

La figure 11 est une représentation schématique en perspective d'une couronne prête pour jumelage avec une carcasse. La zone interne, pourvue de TPE, permet le collage efficace et sûr des deux éléments, de façon similaire à ce qui a été préalablement décrit pour les modes de réalisation précédents avec une bande de roulement restreinte à la zone du sommet.

### v) Matériaux

Le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### 1. Composition de la sous-couche

Le pneumatique selon l'invention a pour caractéristique essentielle d'être pourvu d'une couche élastomère dite « sous-couche » de formulation différente de la portion externe, sculptée, de la bande de roulement, ladite sous-couche comprenant au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

1.1. Elastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et élastomères peut varier.

1.1.1. Structure du TPE

La masse moléculaire moyenne en nombre (notée $Mn$) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse $Mn$ trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour sous-couche de pneumatique.

La masse moléculaire moyenne en nombre ($Mn$) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 $\mu$m avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 $\mu$l. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité $Ip$ (rappel : $Ip = Mw/Mn$ avec $Mw$ masse moléculaire moyenne en poids et $Mn$ masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la $Tg$ relative au bloc élastomère. Le TPE présente préférentiellement une température de transition vitreuse ("$Tg$") qui est préférentiellement inférieure ou égale à 25°C, plus préférentiellement inférieure ou égale à 10°C. Une valeur de $Tg$ supérieure à ces minima peut diminuer les performances de la sous-couche lors d'une utilisation à très basse température ; pour une telle utilisation, la $Tg$ du TPE est plus préférentiellement encore inférieure ou égale à -10°C. De manière préférentielle également, la $Tg$ du TPE est supérieure à -100°C.

De manière connue, les TPE présentent deux pics de température de transition vitreuse ($Tg$, mesurée selon ASTM D3418), la température la plus basse, étant relative à la partie élastomère du TPE, et la température la plus haute, étant relative à la partie thermoplastique du TPE. Ainsi, les blocs souples des TPE se définissent par une $Tg$ inférieure à la température ambiante (25°C), tandis que les blocs rigides ont une $Tg$ supérieure à 80°C.

Pour être de nature à la fois élastomère et thermoplastique, le TPE doit être muni de blocs suffisamment incompatibles (c'est-à-dire différents du fait de leur masse, de leur polarité ou de leur $Tg$ respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

1.1.2. Nature des blocs élastomères

Les blocs élastomères du TPE pour les besoins de l'invention, peuvent être tous les élastomères connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en $C_4$ - $C_{14}$ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est choisi parmi le butadiène ou l'isoprène ou un mélange contenant du butadiène et de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en $C_4$ - $C_{14}$ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en sous-couche de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

1.1.3.Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 80°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 80°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 80°C.

Les blocs thermoplastiques ayant une Tg (ou Tf, le cas échéant) supérieure ou égale à 80°C peuvent être constitués à partir de monomères polymérisés de diverses natures, notamment, ils peuvent constituer les blocs suivants ou leurs mélanges :

- les polyoléfines (polyéthylène, polypropylène) ;
- les polyuréthannes ;
- les polyamides ;
- les polyesters ;

- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 80°C peuvent aussi être obtenus à partir de monomères choisis parmi les composés suivants et leurs mélanges :

- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la sous-couche peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en sous-couche de pneumatique.

Le bloc thermoplastique peut également être constitué de plusieurs blocs thermoplastiques tels que définis ci-dessus.

1.1.4. Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein de la sous-couche selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous la dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

### 1.1.5. Quantité de TPE

Si d'éventuels autres élastomères (non thermoplastiques) sont utilisés dans la composition, le ou les élastomères thermoplastiques (TPE) constituent la fraction majoritaire en poids ; ils représentent alors au moins 65%, de préférence au moins 70% en poids, plus préférentiellement au moins 75% en poids de l'ensemble des élastomères présents dans la composition élastomère. De manière préférentielle également, le ou les élastomères TPE représentent au moins 95% (en particulier 100%) en poids de l'ensemble des élastomères présents dans la composition élastomère.

Ainsi, la quantité totale d'élastomère TPE est comprise dans un domaine qui varie de 65 à 100 pce, préférentiellement de 70 à 100 pce et notamment de 75 à 100 pce. De manière préférentielle également, la composition contient de 95 à 100 pce d'élastomère TPE. Le ou les élastomères TPE sont préférentiellement le ou les seuls élastomères de la sous-couche.

### 1.2 Elastomère Non Thermoplastique

Le ou les élastomères thermoplastiques décrits précédemment sont suffisants à eux seuls pour que soit utilisable la sous-couche selon l'invention.

La composition de la sous-couche selon l'invention, peut comporter au moins un (c'est-à-dire un ou plusieurs) caoutchouc diénique à titre d'élastomère non thermoplastique, ce caoutchouc diénique pouvant être utilisé seul, ou en coupage avec au moins un (c'est-à-dire un ou plusieurs) autre caoutchouc ou élastomère non thermoplastique.

Le taux total d'élastomère non thermoplastique, optionnel, est compris dans un domaine variant de 0 à 35 pce, préférentiellement de 0 à 30 pce, plus préférentiellement de 0 à 25 pce, et plus préférentiellement encore de 0 à 5 pce. De manière préférentielle également, la sous-couche du pneumatique selon l'invention ne contient pas d'élastomère non thermoplastique.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone - carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelle que soit la catégorie ci-dessus, susceptible d'être utilisé dans les compositions conformes à l'invention:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la sous-couche du pneumatique selon la présente invention.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

1.3. Polymère thermoplastique à base de polyéther

La sous-couche décrite précédemment peut comporter de manière optionnelle en plus de constituants présentés précédemment, un ou plusieurs polymères thermoplastiques à base de polyéther. Lorsqu'ils sont présents dans la composition, on préfère que le taux total de polymères thermoplastiques à base de polyéther soit inférieur à 40 pce, préférentiellement compris entre 2 et 35 pce, plus préférentiellement compris entre 5 et 30 pce, et très préférentiellement compris entre 10 et 25 pce. Ces polymères thermoplastiques peuvent être notamment les polymères de poly(para-phénylène éther) (noté en abrégé "PPE"). Ces polymères thermoplastiques PPE sont bien connus de l'homme du métier, ce sont des résines solides à température ambiante (20°C) compatibles avec les polymères styréniques, qui ont notamment utilisées pour augmenter la Tg d'élastomères TPE dont le bloc thermoplastique est un bloc styrénique (voir par exemple "Thermal, Mechanical and Morphological Analyses of Poly(2,6-dimethyl-1,4-phenylene oxide)/Styrene-Butadiene-Styrene Blends", Tucker, Barlow and Paul, Macromolecules, 1988, 21, 1678-1685).

## 1.4. Charge nanométrique ou renforçante

L'élastomère thermoplastique décrit précédemment est suffisant à lui seul pour que soit utilisable la sous-couche selon l'invention, néanmoins une charge renforçante peut être utilisée dans la composition.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Lorsqu'une charge renforçante inorganique est utilisée, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

## 1.5. Additifs divers

La sous-couche décrite précédemment peut comporter par ailleurs les divers additifs usuellement présents dans les sous-couches connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique. De manière préférentielle, la sous-couche ne contient pas tous ces additifs en même temps et de manière encore plus préférentielle, la sous-couche ne contient aucun de ces agents.

Egalement et à titre optionnel, la composition de la sous-couche de l'invention peut contenir un système de réticulation connu de l'homme du métier. Préférentiellement, la composition ne contient pas de système de réticulation. De la même manière, la composition de la sous-couche de l'invention peut contenir une ou plusieurs charges micrométriques, inertes telles que les charges lamellaires connues de l'homme de l'art. De préférence, la composition de contient pas de charge micrométrique.

Optionnellement également, la composition de la sous-couche de l'invention peut contenir un agent plastifiant, tel qu'une huile d'extension (ou huile plastifiante) ou une résine plastifiante dont la fonction est de faciliter la mise en oeuvre de la sous-couche, particulièrement son intégration au pneumatique par un abaissement du module et une augmentation du pouvoir tackifiant. Lorsque la composition en comprend, on préfère que le taux de plastifiant varie de 0 à 80 pce, plus préférentiellement de 0 à 50 pce, plus préférentiellement encore de 0 à 30 pce, et notamment moins de 10 pce, selon la Tg et le module visés pour la sous-couche. Selon une variante préférentielle de l'invention, la composition de la sous-couche ne contient pas de plastifiant.

Outre les élastomères précédemment décrits, la composition de la sous-couche peut aussi comporter, toujours selon une fraction pondérale minoritaire par rapport à l'élastomère blocs, des polymères thermoplastiques autres que ceux à base de polyéther. On préfère que la composition de contienne pas de tels polymères thermoplastiques autres que ceux à base de polyéther, ou lorsqu'ils sont présents dans la composition, on préfère que le taux total de polymères thermoplastiques autres que ceux à base de polyéther soit inférieur à 30 pce, préférentiellement inférieur à 10 pce. De manière très préférentielle, la composition est dépourvue de tels polymères thermoplastiques autres que ceux à base de polyéthers, ou en contient moins de 5 pce.

## 2. Préparation de la sous-couche et du pneumatique selon l'invention

Les élastomères TPE peuvent être mis en oeuvre de façon usuelle pour des TPE, par extrusion ou moulage, par exemple à partir d'une matière première disponible sous la forme de billes ou de granulés.

La sous-couche pour le pneumatique selon l'invention est préparée de façon usuelle, par exemple, par incorporation des différents composants dans une extrudeuse bi-vis, de façon à réaliser la fusion de la matrice et une incorporation de tous les ingrédients, puis utilisation d'une filière permettant de réaliser le profilé.

Cette sous-couche peut être montée sur un pneumatique de manière usuelle, ledit pneumatique comprenant en plus de la sous-couche nécessaire pour les besoins de l'invention, une bande de roulement, un sommet et une armature de sommet, et préférentiellement, deux flancs et deux bourrelets, et une armature de carcasse ancrée aux deux bourrelets et s'étendant d'un flanc à l'autre.

On rappelle que dans le pneumatique selon l'invention, la possibilité d'un déchapage facilité est représentée par la différence entre le rapport de module élastique à 200°C et à 60°C de la sous-couche et celui des couches adjacentes, lorsque l'équation suivante est vérifiée avec chacune des couches adjacentes :

$$GA('200°C)xGA('60°C)xGB('200°C)xGB('60°C)≤0,6$$

dans laquelle $GA'T$ représente la composante élastique du module de cisaillement de la sous-couche à la température T, et $GB'T$ représente la composante élastique du module de cisaillement de la couche adjacente à la sous-couche à la température T. En effet, lorsque cette équation est vérifiée, on comprend que la sous-couche va se ramollir beaucoup plus avant 200°C que la couche adjacente, ce qui est une condition importante pour un déchapage facilité.

De préférence, la différence entre le rapport de module élastique à 200°C et à 60°C de la sous-couche et celui des couches adjacentes est telle que l'équation suivante est vérifiée :

$$GA('200°C)xGA('60°C)xGB('200°C)xGB('60°C)≤0,5$$

Et plus préférentiellement, la différence entre le rapport de module élastique à 200°C et à 60°C de la sous-couche et celui des couches adjacentes est telle que l'équation suivante est vérifiée :

$$GA('200°C)xGA('60°C)xGB('200°C)xGB('60°C)≤0,45$$

Selon les applications pneumatiques visées, il peut être préférable que la sous-couche possède des propriétés de module élastique telles que l'équation suivante est vérifiée :

$$GA('100°C)xGA('60°C)>0,4$$

En effet, une variation de module élastique faible entre 60°C et 100°C est un bon indicateur du fait que la sous-couche ne s'est pas trop ramollie à ces températures, ce qui est souhaitable pour le bon fonctionnement du pneumatique, notamment s'il est destiné à des pneumatiques de véhicules de tourisme ou de poids-lourd, qui ont une température de fonctionnement dépassant les 60°C.

De préférence, la sous-couche possède des propriétés de module élastique telles que l'équation suivante est vérifiée :

$$GA('100°C)xGA('60°C)>0,5$$

De préférence, la sous-couche possède des propriétés de module élastique telles que l'équation suivante est vérifiée :

$$GA('100°C)xGA('60°C)>0,6$$

De préférence, la sous-couche possède des propriétés de module élastique telles que l'équation suivante est vérifiée :

$$GA('100°C)xGA('60°C)>0,7$$

Les couches adjacentes à la sous-couche de bande de roulement sont typiquement la bande de roulement d'une part et d'autre part la ceinture (ou armature de sommet) du pneumatique.

Dans le cas où la sous-couche de bande de roulement est située à l'intérieur de la bande de roulement d'origine, on comprend que les deux couches adjacentes sont d'une part la partie supérieure de la bande de roulement (radialement externe, faisant l'objet du déchapage) et d'autre part la partie inférieure (radialement interne par rapport à la sous-couche) de la bande de roulement d'origine. Dans ce cas, il est possible que les deux couches adjacentes de la sous-couche soient de même nature, ou de nature différente.

Quelle que soit la nature chimique des couches adjacentes, l'équation présentée ci-dessus doit être vérifiée pour que l'invention fonctionne correctement.

Selon un mode de réalisation préférentiel, les couches adjacentes peuvent être constituées de compositions à base d'élastomères diéniques, bien connues de l'homme de l'art, et tels que ceux définis ci-dessus en tant qu'élastomères optionnels complémentaires des élastomères thermoplastiques de la sous-couche.

De telles couches adjacentes sont décrites dans de nombreux brevets bien connus de l'homme de l'art et comprennent généralement, outre les élastomères diéniques précédemment décrits, des additifs tels que ceux décrits ci-dessus pour la composition de la sous-couche et notamment des charges renforçantes, telles que de la silice et/ou du noir de carbone, des plastifiants sous forme d'huile ou de résine plastifiante, un système de réticulation et autres additifs bien connus de l'homme de l'art tels que des antioxydants.

Selon un autre mode de réalisation préférentiel, les couches adjacentes peuvent être également constituées de compositions à base d'élastomères thermoplastiques ou comprenant des élastomères thermoplastiques, et notamment ce peut être le cas de la bande de roulement.

Selon encore un autre mode de réalisation préférentiel, une des couches adjacentes peut être une couche constituée d'une composition à base d'élastomère diénique (notamment la ceinture de pneumatique) tandis que l'autre couche adjacente peut être constituée d'une composition à base d'élastomère thermoplastique (notamment la bande de roulement).

Alternativement, la possibilité d'un déchapage facilité est également représentée par la différence entre la variation de module élastique entre 60°C et 200°C de la sous-couche et celle des couches adjacentes, lorsque l'équation suivante est vérifiée avec chacune des couches adjacentes :

$$EA('200°C)xEA('60°C)xEB('200°C)xEB('60°C)≤0,6$$

dans laquelle E'A(T) GA'représente la composante élastique du module de cisaillement de la sous-couche à la température T, et E'B(T) GB'représente la composante élastique du module de cisaillement de la couche adjacente à la sous-couche à la température T. Dans ce cas le module E'(T) est mesuré en compression.

Ainsi, l'invention peut être définie en remplaçant l'équation comportant les rapports de modules G' par l'équation ci-dessus comportant les rapports de modules E'. Les mêmes modes de réalisations sont envisageables et les préférences indiquées ci-dessus s'appliquent mutatis mutandis.

**Revendications**

1. Carcasse de pneumatique comportant un mélange élastomère de carcasse, deux flancs (2), une zone de sommet (3) adaptée pour recevoir, radialement extérieurement, une bande de roulement (4), la surface intérieure des flancs et du sommet formant une paroi intérieure (10), ladite carcasse comprenant également une surface circonférentielle de support (6) de bande de roulement recouverte d'une couche d'élastomère thermoplastique (TPE) située radialement extérieurement par rapport à la carcasse, la couche d'élastomère thermoplastique étant réticulée avec la couche adjacente de mélange élastomère de carcasse, **caractérisée en ce que** l'interface entre la couche d'élastomère thermoplastique (TPE) et le mélange élastomère de carcasse est co-réticulée sans que la couche d'élastomère thermoplastique (TPE) soit réticulée dans la masse, la carcasse étant obtenue par moulage et vulcanisation conjoint du mélange élastomère de carcasse comportant des agents de réticulation et de la couche élastomère thermoplastique adjacente dépourvue d'agents de réticulation.

2. Carcasse de pneumatique selon la revendication 1, **caractérisée en ce que** la couche d'élastomère thermoplastique (TPE) est recouverte d'une membrane de protection amovible.

3. Carcasse de pneumatique selon l'une des revendications précédentes, **caractérisée en ce que** la couche de d'élastomère thermoplastique (TPE) est constituée de SBS ou de SBS/PPE.

4. Carcasse de pneumatique selon l'une des revendications 1 à 3, **caractérisée en ce que** la couche d'élastomère thermoplastique (TPE) comporte une épaisseur comprise entre 10 μm et 1mm.

5. Carcasse de pneumatique selon l'une des revendications 1 à 3, **caractérisée en ce que** la couche d'élastomère thermoplastique (TPE) comporte une épaisseur comprise entre 10 μm et 200 μm.

6. Carcasse de pneumatique selon l'une des revendications 1 à 3, **caractérisée en ce que** la couche d'élastomère thermoplastique (TPE) comporte une épaisseur comprise entre 10 μm et 80 μm.

7. Carcasse de pneumatique selon l'une des revendications précédentes, **caractérisée en ce qu'**elle comporte une structure de renfort (5) de carcasse, de préférence pourvue de renforts radiaux et/ou longitudinaux.

8. Carcasse de pneumatique selon l'une des revendications précédentes, **caractérisée en ce qu'**elle comporte au moins une armature (7) de sommet.

9. Pneumatique constitué d'une carcasse selon l'une des revendications 1 à 8, sur laquelle est disposée une bande de roulement (4) fixée contre la surface circonférentielle de support de bande de roulement.

10. Pneumatique selon la revendication 9, dans lequel la bande de roulement (4) est fixée à la carcasse par thermocollage.

11. Pneumatique selon l'une des revendications 9 ou 10, dans lequel la bande de roulement (4) est fixée à la carcasse de façon amovible.

## Patentansprüche

1. Reifenkarkasse, umfassend ein elastomeres Karkassengemisch, zwei Flanken (2), einen Scheitelbereich (3), der dazu angepasst ist, radial außen eine Lauffläche (4) aufzunehmen, wobei die Innenfläche der Flanken und des Scheitels eine Innenwand (10) ausbildet, wobei die Karkasse außerdem eine Laufflächenumfangsstützfläche (6) umfasst, die mit einer thermoplastischen Elastomerschicht (TPE) bedeckt ist, die sich radial außen in Bezug auf die Karkasse befindet, wobei die thermoplastische Elastomerschicht mit der angrenzenden elastomeren Karkassengemischschicht vernetzt ist,
**dadurch gekennzeichnet, dass** die Schnittstelle zwischen der thermoplastischen Elastomerschicht (TPE) und dem elastomeren Karkassengemisch covernetzt ist, ohne dass die thermoplastische Elastomerschicht (TPE) in der Masse vernetzt ist, wobei die Karkasse durch gemeinsame Formung und Vulkanisation des elastomeren Karkassengemischs, das Vernetzungsmittel umfasst, und der angrenzenden thermoplastischen Elastomerschicht, die frei von Vernetzungsmitteln ist, erhalten wird.

2. Reifenkarkasse nach Anspruch 1, **dadurch gekennzeichnet, dass** die thermoplastische Elastomerschicht (TPE) von einer abnehmbaren Schutzmembran bedeckt ist.

3. Reifenkarkasse nach einem der vorangehenden Ansprüche, **dadurch gekennzeichnet, dass** die thermoplastische Elastomerschicht (TPE) aus SBS oder SBS/PPE gebildet ist.

4. Reifenkarkasse nach einem der Ansprüche 1 bis 3, **dadurch gekennzeichnet, dass** die thermoplastische Elastomerschicht (TPE) eine Dicke von 10 $\mu$m bis 1 mm umfasst.

5. Reifenkarkasse nach einem der Ansprüche 1 bis 3, **dadurch gekennzeichnet, dass** die thermoplastische Elastomerschicht (TPE) eine Dicke von 10 $\mu$m bis 200 $\mu$m umfasst.

6. Reifenkarkasse nach einem der Ansprüche 1 bis 3, **dadurch gekennzeichnet, dass** die thermoplastische Elastomerschicht (TPE) eine Dicke von 10 $\mu$m bis 80 $\mu$m umfasst.

7. Reifenkarkasse nach einem der vorangehenden Ansprüche, **dadurch gekennzeichnet, dass** sie eine Karkassenverstärkungsstruktur (5) umfasst, die vorzugsweise mit radialen und/oder longitudinalen Verstärkungen versehen ist.

8. Reifenkarkasse nach einem der vorangehenden Ansprüche, **dadurch gekennzeichnet, dass** sie zumindest eine Scheitelbewehrung (7) umfasst.

9. Reifen, bestehend aus einer Karkasse nach einem der Ansprüche 1 bis 8, auf der eine Lauffläche (4) angeordnet ist, die an der Laufflächenumfangsstützfläche befestigt ist.

10. Reifen nach Anspruch 9, wobei die Lauffläche (4) durch Heißverkleben an der Karkasse befestigt ist.

11. Reifen nach einem der Ansprüche 9 oder 10, wobei die Lauffläche (4) in abnehmbarer Weise an der Karkasse befestigt ist.

**Claims**

1. Tyre carcass comprising a carcass elastomer mixture, two sidewalls (2), a crown region (3) suitable for receiving a tread (4) radially externally, the internal surface of the sidewalls and of the crown forming an internal wall (10), said carcass also comprising a circumferential tread support surface (6), covered with a layer of thermoplastic elastomer (TPE) located radially externally relative to the carcass, the layer of thermoplastic elastomer being crosslinked with the adjacent layer of carcass elastomer mixture, **characterized in that** the interface between the layer of thermoplastic elastomer (TPE) and the carcass elastomer mixture is co-crosslinked without the layer of thermoplastic elastomer (TPE) being crosslinked through its body, the carcass being obtained by joint moulding and vulcanization of the carcass elastomer mixture comprising crosslinking agents and of the adjacent thermoplastic elastomer layer that is devoid of crosslinking agents.

2. Tyre carcass according to Claim 1, **characterized in that** the layer of thermoplastic elastomer (TPE) is covered with a removable protective membrane.

3. Tyre carcass according to either of the preceding claims, **characterized in that** the layer of thermoplastic elastomer (TPE) consists of SBS or of SBS/PPE.

4. Tyre carcass according to one of Claims 1 to 3, **characterized in that** the layer of thermoplastic elastomer (TPE) comprises a thickness of between 10 $\mu$m and 1 mm.

5. Tyre carcass according to one of Claims 1 to 3, **characterized in that** the layer of thermoplastic elastomer (TPE) comprises a thickness of between 10 $\mu$m and 200 $\mu$m.

6. Tyre carcass according to one of Claims 1 to 3, **characterized in that** the layer of thermoplastic elastomer (TPE) comprises a thickness of between 10 $\mu$m and 80 $\mu$m.

7. Tyre carcass according to one of the preceding claims, **characterized in that** it comprises a carcass reinforcement structure (5), preferably provided with radial and/or longitudinal reinforcers.

8. Tyre carcass according to one of the preceding claims, **characterized in that** it comprises at least one crown reinforcement (7).

9. Tyre consisting of a carcass according to one of Claims 1 to 8, on which a tread (4) is deposited, fixed to the circumferential tread support surface.

10. Tyre according to Claim 9, in which the tread (4) is fixed to the carcass by thermal bonding.

11. Tyre according to either of Claims 9 and 10, in which the tread (4) is removably fixed to the carcass.

Figure 1A        Figure 1B        Figure 1C

Figure 1D        Figure 1E

EP 3 157 763 B1

Figure 2

Figure 3

Figure 4

Figure 5A

Figure 5B

Figure 6

Figure 7A

Figure 7B

Figure 8A

Figure 8B

Figure 9A

Figure 9B

Figure 10

Figure 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009139449 A1
- JP 2011042091 B
- JP 2011042229 B
- FR 2988728
- WO 2008006185 A
- US 4946899 A
- FR 2740778
- US 6013718 A

- FR 2765882
- US 5977238 A
- WO 0192402 A
- US 6815473 B
- WO 2004096865 A
- US 20060089445 A
- EP 1127909 A
- US 6503973 B

**Littérature non-brevet citée dans la description**

- **Z. FODOR ; J.P. KENNEDY.** *Polymer Bulletin,* 1992, vol. 29 (6), 697-705
- **J. E. PUSKAS ; G. KASZAS ; J.P. KENNEDY ; W.G. HAGER.** *Journal of Polymer Science Part A : Polymer Chemistry,* 1992, 30, , 41
- **J.P. KENNEDY ; N. MEGURIYA ; B. KESZLER.** *Macromolecules,* 1991, vol. 24 (25), 6572-6577
- **G. KASZAS ; J.E. PUSKAS ; P. KENNEDY.** *Applied Polymer Science,* 1990, vol. 39 (1), 119-144

- **J.E. PUSKAS ; G. KASZAS ; J.P. KENNEDY.** *Macromolecular Science, Chemistry,* 1991, vol. A28, 65-80
- **TUCKER ; BARLOW ; PAUL.** Thermal, Mechanical and Morphological Analyses of Poly(2,6-dimethyl-1,4-phenylene oxide)/Styrene-Butadiene-Styrene Blends. *Macromolecules,* 1988, vol. 21, 1678-1685